# EUROPÄISCHE PATENTSCHRIFT

(11) **EP 1 902 977 B1**
(45) Veröffentlichungstag und Bekanntmachung des Hinweises auf die Patenterteilung: **15.07.2009**
(21) Anmeldenummer: 06120939.1
(22) Anmeldetag: 20.09.2006
(51) Int. Cl.: B65G 1/08, B65G 1/137

(54) **Automatisch befüllbarer Einlagerungspuffer mit mehreren Pufferschächten**
Automatically fillable storage buffer with several buffer shafts
Tampon de stockage à remplissage automatisé muni de plusieurs gaines tampons

(43) Veröffentlichungstag der Anmeldung: 26.03.2008
(73) Patentinhaber: Rowa Automatisierungssysteme GmbH, 53539 Kelberg (DE)
(72) Erfinder: Hellenbrand, Christoph, 56761 Kaifenheim (DE)
(74) Vertreter: Schmidt, Frank-Michael

(56) Entgegenhaltungen:
- DE-A1- 19 534 954
- JP-A- 59 004 504

## Beschreibung

Die Erfindung betrifft einen Einlagerungspuffer für ein automatisiertes Stückgutlager mit mehreren parallel angeordneten langgestreckten, geneigten Pufferschächten, wobei an dem unteren Ende jedes Pufferschachts eine freigebbare Sperre angeordnet ist, die ein Herausrutschen von in dem Pufferschacht befindlichen Stückgütern verhindert und nach Heranfahren eines einzulagernde Stückgüter aufnehmenden Bediengeräts freigebbar ist, wobei die oberen Enden der Pufferschächte an eine Übergabeebene angrenzen.

Einlagerungspuffer der eingangs genannten Art werden beispielsweise bei automatisierten Lagern für Arzneimittelpackungen in Apotheken eingesetzt, bei denen eine größere Anzahl angelieferter Arzneimittelpackungen innerhalb eines relativ kurzen Zeitintervalls schnell in das automatisierte Lager einzulagern sind und bei denen die in den Einlagerungspuffer aufgenommenen Arzneimittelpackungen anschließend mit Hilfe eines Lagerbediengeräts aus dem Einlagerungspuffer entnommen und in verschiedene Lagerschächte verteilt werden, wobei für diesen Verteilvorgang in der Regel ein längerer Zeitraum zur Verfügung steht. Beispielsweise können die angelieferten Arzneimittelpackungen von einer Bedienperson in Zeitabständen von wenigen Sekunden in den Einlagerungspuffer eingeführt werden. Dort werden sie zwischengespeichert. Anschließend entnimmt das Bediengerät während der Zeiten, in denen das Bediengerät nicht für die Auslagerung von Arzneimittelpackungen benötigt wird (beispielsweise nachts), die in dem Einlagerungspuffer befindlichen Arzneimittelpackungen und verteilt diese auf die Lagerschächte des automatisierten Stückgutlagers.

Ein Einlagerungspuffer der eingangs genannten Art ist beispielsweise aus der Offenlegungsschrift DE 196 35 396 A1 bekannt. Bei dem bekannten Einlagerungspuffer werden die einzelnen angelieferten Arzneimittelpackungen manuell von einer Bedienperson in die oberen Enden mehrerer geneigter Pufferschächte eingeführt. An jedem der geneigten Pufferschächte befindet sich dann eine Meßvorrichtung, mit der die Abmessungen der durchrutschenden Arzneimittelpackungen und ein die Packungen identifizierender Barcode erfaßt werden können. Selbstverständlich muß die Bedienperson die einzuführenden Arzneimittelpackungen in einer vorgegebenen Orientierung einführen und dabei jeweils denjenigen Pufferschacht auswählen, der der Breite der Arzneimittelpackung angepaßt ist. Der bekannte Einlagerungspuffer hat zum einen den erheblichen Nachteil, daß jeder Pufferschacht mit einer Meß- und Identifiziereinrichtung auszustatten ist, was zu einem erhöhten Platzbedarf und erheblichen Kosten führt. Darüber hinaus muß die Bedienperson stets einen angepaßten Schacht wählen, was der Gefahr einer Fehlbedienung unterliegt.

Ein Einlagerungspuffer gemäß dem Oberbegriff des Anspruchs 1 ist bereits aus JP-A-59 00 4 504 bekannt.

Aufgabe der Erfindung ist es daher, einen Einlagerungspuffer großer Kapazität zu schaffen, der eine einfache Befüllung mit hoher Eingabefrequenz gestattet.

Diese Aufgabe wird erfindungsgemäß durch einen Einlagerungspuffer mit den Merkmalen des Anspruchs 1 gelöst. Ein Einlagerungspuffer der eingangs genannten Art ist erfindungsgemäß dadurch gekennzeichnet, daß die oberen Enden der Pufferschächte an eine Übergabeebene angrenzen, daß eine Fördereinrichtung an die Übergabeebene angrenzt, auf der einzulagernde Stückguter von der Meßeinrichtung zu einem einer Steuereinrichtung bekannten Ort auf der Fördereinrichtung herantransportiert werden, und daß über der Übergabeebene und dem bekannten Ort der angrenzenden Fördereinrichtung eine von der Steuereinrichtung gesteuerte Greifvorrichtung zum Ergreifen einzelner Stückgüter angeordnet ist, die ein an dem bekannten Ort auf der Fördereinrichtung eintreffendes Stückgut ergreifen und auf der Übergabeebene zu einem oberen Ende eines ausgewählten Pufferschachts derart bewegen und freigeben kann, daß es in den Pufferschacht in einer vorgegebenen Orientierung hineinrutscht. Die Übergabeebene ist hier eine gedachte Ebene, auf der der Transport der Stückgüter stattfindet, d. h. in der sich die Auflageflächen der Stückgüter während des Transports bewegen. Die oberen Enden der Pufferschächte grenzen dabei so an die Übergabeebene an, daß sich die Unterkanten der oberen Enden der Pufferschächte in der Übergabeebene oder kurz darunter befinden. Die Fördereinrichtung grenzt derart an die Übergabeebene an, daß sich die Auflageflächen der auf der Fördereinrichtung an dem bekannten Ort befindenden Stückgüter in der Übergabeebene oder - technologische Toleranzen berücksichtigend - kurz darüber befinden. Unter einer Greifvorrichtung soll im allgemeinsten Sinne jede Vorrichtung verstanden werden, die ein Erfassen eines an dem bekannten Ort befindlichen Stückguts und dessen Bewegung auf der Übergabeebene zu einem oberen Ende eines ausgewählten Pufferschachts ermöglicht. Sofern - wie bei einem bevorzugten Ausführungsbeispiel - eine Auflagefläche zur Verfügung steht, braucht die Greifeinrichtung die Stückgüter lediglich auf der Auflagefläche zu führen, nicht jedoch so fest zu greifen, daß eine senkrechte Haltekraft aufgebracht wird. Fehlt jedoch die Abstützung durch eine Auflagefläche, so muß die Greifvorrichtung das ergriffene Stückgut tragen, so daß es nicht hinabrutscht.

Die Meßeinrichtung zum Erfassen von Abmessungen einzulagernder Stückgüter erfaßt vorzugsweise - bei quaderförmigen Stückgütern - sämtliche drei Außenabmessungen. Vorzugsweise ist außerdem eine Identifikationseinrichtung vorgesehen, die eine auf der Arzneimittelpackung angebrachte Identifikation (Barcode oder ID-Tag) bei Eingabe des Stückguts in den Einlagerungspuffer erfaßt. In Zuordnung zu der erfaßten Identifikation gespeicherte Angaben über Dimensionen der Arzneimittelpackung können dann mit den gemessenen Dimensionen verglichen werden, was sowohl zum Überprüfen der erfaßten Identifikation als auch zum Prüfen der erfaßten Abmessungen dient und die Sicherheit der Einlagerung erhöht. Vorzugweise werden die einzelnen einzulagernden Stückgüter zu dem der Steuereinrichtung bekannten Ort in einer vorgegebenen räumlichen Orientierung herantransportiert. Bei dem bekannten Ort kann es sich um eine vorgegebene Position, auf die die Greifvorrichtung zugreift, oder auch um eine Reihe von möglichen Positionen entlang einer vorgegebenen Transportstrecke handeln.

Da sich die Greifvorrichtung bei dem erfindungsgemäßen Einlagerungspuffer lediglich in einer Ebene (Übergabeebene) zu bewegen braucht, vereinfachen sich der Antriebs- und Steuerungsaufwand für die Greifvorrichtung. Damit einher geht eine Verringerung der Masse. Dies alles führt zu einer höheren Geschwindigkeit beim Transport der Stückgüter von der Fördereinrichtung zu den Pufferschächten. Dies gestattet ein schnelles automatisiertes Befüllen des Einlagerungspuffers. Darüber hinaus können die bei manueller Beschickung auftretenden Fehlbefüllungen vermieden werden, da die Steuereinrichtung die relevanten Abmessungen der einzulagernden Stückgüter kennt und stets den geeigneten Pufferschacht (den mit der angepaßten Breite) auswählt. Schließlich vereinfacht sich der Gesamtaufbau gegenüber der bekannten Vorrichtung, da lediglich nur eine Meßeinrichtung auf dem Förderweg erforderlich ist.

Bei einer bevorzugten Ausführungsform ist die Greifvorrichtung so ausgebildet und wird sie so von der Steuereinrichtung gesteuert, daß das ergriffene Stückgut auf der Übergabeebene zwischen dem bekannten Ort der Fördereinrichtung und einer Übergabeposition vor dem oberen Ende des ausgewählten Pufferschachts linear nur in einer Längsrichtung und nach Erreichen der Übergabeposition quer zu der Längsrichtung in den Pufferschacht bewegt wird. Bei dieser Ausführungsform ist lediglich ein Antrieb zum Bewegen der Greifvorrichtung in der Längsrichtung erforderlich, während ein zweiter (kleinerer) Antrieb für einen kurzen Weg quer zur Längsrichtung an der Greifvorrichtung vorzusehen ist. Dieser noch weiter vereinfachte Antrieb erlaubt eine noch schnellere Ansteuerung sowie eine geringere Masse mit der Folge einer beschleunigten Einlagerung und höheren Einlagerungsfrequenz.

Bei der zuletzt genannten Weiterbildung ist die Greifvorrichtung vorzugsweise ein Backengreifer, dessen Backen quer zu Längsrichtung angeordnet sind. Vorzugsweise ist an wenigstens einer Backe eine Querschiebevorrichtung vorgesehen, die das ergriffene Stückgut in der Querrichtung verschieben kann. Beispielsweise wird als Querschiebevorrichtung ein um wenigstens eine der beiden Backen umlaufendes Reibband (beispielsweise Gummiband) verwendet.

Bei einer bevorzugten Weiterbildung des erfindungsgemäßen Einlagerungspuffers wird die Übergabeebene von der Oberfläche eines Auflagetischs gebildet, wobei die von der Greifvorrichtung auf der Übergabeebene bewegten Stückgüter auf dem Auflagetisch aufliegen. Der Auflagetisch ist vorzugsweise rechteckig, wobei die oberen Enden der Pufferschächte an einer Längskante des Auflagetischs und die Fördereinrichtung an einer Querkante angrenzten. Die Oberfläche des Auflagetischs ist vorzugsweise waagerecht. Es sind aber auch Ausführungsformen denkbar, bei denen der Auflagetisch geneigt ist, beispielsweise in der Ebene der geneigten Pufferschächte.

Durch Vorsehen des Auflagetischs in der Übergabeebene wird die Greifvorrichtung weiter vereinfacht, da diese nicht mehr die Kräfte zum Tragen oder Stützen des transportierten Stückguts aufzubringen braucht. Die Greifvorrichtung braucht lediglich eine Führungseinrichtung zu sein, die die Stückgüter über dem Auflagetisch schiebt und dabei führt (lenkt). Die Fördereinrichtung einerseits und die oberen Enden der Pufferschächte andererseits grenzen dabei so an den Auflagetisch an, daß ein problemloses Herunterschieben des Stückguts von der Fördereinrichtung auf den Auflagetisch und von dem Auflagetisch in die Pufferschächte ermöglicht wird. Zusätzlich könnte die Oberfläche des Auflagetischs mit einer reibungsmindernden Beschichtung versehen sein; alternativ könnte auch ein Luftkissen auf der Oberfläche des Auflagetischs erzeugt werden (beispielsweise durch eine Vielzahl mit Druckluft beaufschlagter Öffnungen in der Oberfläche des Auflagetischs).

Die an die Übergabeebene bzw. den Auflagetisch angrenzende Fördereinrichtung ist vorzugsweise ein ebenes Förderband, auf dem die Stückguter von der Meßeinrichtung herantransportiert werden. Die Steuerung des Förderbands ist dabei derart mit der Steuereinrichtung gekoppelt, daß stets die Position der herantransportierten Stückgüter auf dem Förderband bekannt ist, so daß die Greifvorrichtung zielgenau zugreifen kann.

Bei einer bevorzugten Ausführungsform des erfindungsgemäßen Einlagerungspuffers sind mehrere Gruppen von Pufferschächten unterschiedlicher Breiten vorgesehen. Jede Gruppe weist eine vorgegebene Anzahl von Pufferschächten einer Breite auf. Vorzugsweise sind fünf bis acht Gruppen mit jeweils zwei bis fünf Pufferschächten vorgesehen. Bei einem Ausführungsbeispiel gibt es sechs Gruppen, d. h. sechs verschiedene Breiten, mit jeweils vier Pufferschächten, so daß sich eine Gesamtzahl von 24 nebeneinander angeordneten Pufferschächten ergibt. Die Pufferschächte einer Gruppe können nebeneinander angeordnet oder zwischen Pufferschächte anderer Gruppen verschachtelt sein. Die ausgewählten Breiten der Pufferschächte (beispielsweise sechs verschiedene Breiten) sind dabei an die Abmessungen der erwartungsgemäß einzulagernden Stückgüter (z. B. Arzneimittelpackungen) angepaßt. Vorzugsweise sind die Breiten flexibel veränderbar.

Weitere vorteilhafte und/oder bevorzugte Weiterbildungen der Erfindung sind in den Unteransprüchen gekennzeichnet.

Im folgenden wird die Erfindung anhand eines in der Zeichnung dargestellten bevorzugten Ausführungsbeispiels näher erläutert. In der Zeichnung zeigen:
Figur 1 eine schematische Seitenansicht eines automatisierten Lagers mit einem erfindungsgemäßen Einlagerungspuffer, und
Figur 2 eine schematische Frontansicht des in Figur 1 gezeigten Lagers.

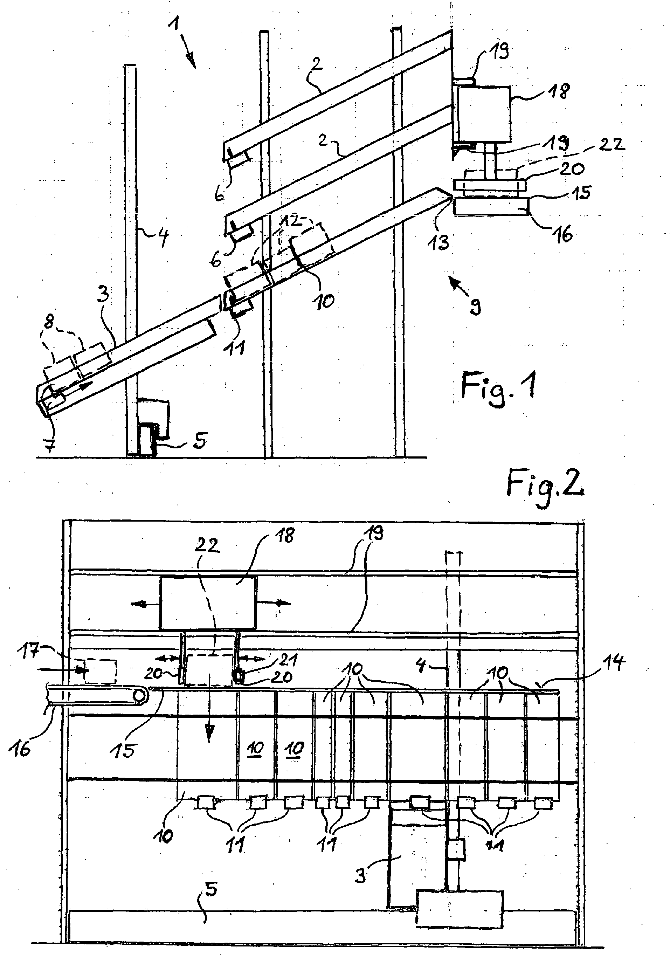

Die Figuren 1 und 2 zeigen schematische Ansichten eines automatisierten Lagers 1 zum Lagern einer Vielzahl von Stückgütern, vorzugsweise Arzneimittelpackungen von quaderförmiger Gestalt. Bei dem dargestellten Lager 1 lagern die Stückgüter in geneigten Lagerschächten 2, deren Breiten an die Breiten der jeweils darin gelagerten Stückgüter angepaßt sind. Die geneigten Lagerschächte 2 sind vorzugsweise nebeneinander in Lagerebenen angeordnet, wobei mehrere Lagerebenen in unterschiedlichen Abständen (zur Aufnahme unterschiedlich hoher Stückgüter) übereinander angeordnet sind. Die Prinzipskizze gemäß Figur 1 zeigt eine Seitenansicht von 2 übereinander angeordneten Lagerebenen mit den Lagerschächten 2. Die Anordnung mehrerer Lagerebenen von Lagerschächten wird auch häufig als Lagerregal bezeichnet. Die Lagerschächte 2 können aus U-förmigen Profilenschienen bestehen; sie können aber auch aus paarweise angeordneten L-förmigen oder T-förmigen Profilen gebildet sein. Vorzugsweise sind die Abstände der die Schächte bildenden Seitenwände variabel ausgeführt.

Die Lagerschächte 2 weisen an ihren unteren Enden Sperr- und Auslösevorrichtungen 6 auf, die ein Herausrutschen von in den Lagerschächten befindlichen Stückgütern verhindern. Entlang einer vor den unteren Enden der Lagerschächte 2 gebildeten Gasse ist ein Bediengerät 3 verfahrbar, wobei das Bediengerät an einer senkrechten Führungsschiene 4 und diese wiederum an einer waagerechten Führungsschiene 5 bewegt werden kann. Das Bediengerät 3 umfaßt einen Transportschacht zur Aufnahme von Stückgütern, wobei der Transportschacht ebenfalls geneigt ist und an seinem unteren Ende eine Sperre aufweist, um ein Herausrutschen einliegender Stückgüter 8 zu verhindern. Die Sperre ist vorzugsweise als Schieber 7 ausgebildet und kann in dem Transportschacht des Bediengeräts 3 nach oben bewegt werden, so daß die einliegenden Stückgüter 8 nach oben aus dem Transportschacht des Bediengeräts 3 herausgeschoben werden können. Das obere Ende des Transportschachts des Bediengeräts 3 ist jeweils an ein unteres Ende eines Lagerschachts 2 derart heranfahrbar, daß nach Auslösen der Sperr- und Auslösevorrichtung 6 eines Lagerschachts 2 die darin einliegenden Stückgüter in den Transportschacht 3 des Bediengeräts 3 rutschen können. Andererseits können in dem Transportschacht des Bediengeräts 3 einliegende Stückgüter 8 mit Hilfe des Schiebers 7 nach oben in einen darüber angeordneten Lagerschacht 2 hineingeschoben werden. Eine derartige Lageranordnung ist beispielsweise in der noch unveröffentlichten Patentanmeldung EP 05 019 718.5 beschrieben.

Das in Figur 1 skizzierte automatisierte Stückgutlager 1 weist einen erfindungsgemäßen Einlagerungspuffer 9 auf. Der Einlagerungspuffer 9 umfaßt mehrere parallel angeordnete langgestreckte, geneigte Pufferschächte 10, die in einer Ebene des Lagers nebeneinander angeordnet sind. In Figur 2 sind die Unterseiten der nebeneinander angeordneten Pufferschächte 10 sichtbar. An den unteren Enden der Pufferschächte 10 sind jeweils Sperr- und Auslösevorrichtungen 11 angeordnet, die ein Herausrutschen von in den Pufferschächten 10 befindlichen Stückgütern 12 verhindern. Nach Heranfahren des Bediengeräts 3 derart, daß sich das obere Ende des Transportschachts des Bediengeräts 3 an dem unteren Ende eines Lagerschachts 10 befindet, kann die Sperr- und Auslösevorrichtung 11 des Pufferschachts 10 freigegeben oder ausgelöst werden, so daß in dem Pufferschacht 10 enthaltene Stückgüter 12 in den Transportschacht des Bediengeräts 3 rutschen. Die Sperr- und Auslösevorrichtung 11 des Pufferschachts 10 kann aktiv oder passiv arbeiten. Eine aktive Sperr- und Auslösevorrichtung 11 weist eine Steuerelektronik und einen gesteuerten Stellantrieb auf und wird von Steuersignalen betätigt, die die Steuerelektronik verlassen, den Stellantrieb zu betätigen, so daß die Sperre freigegeben (d. h. aus dem Schacht herausbewegt) wird. Selbstverständlich werden die Steuersignale erst dann erzeugt, wenn sich der Transportschacht des Bediengeräts 3 an dem unteren Ende des Pufferschachts 10 befindet. Eine passive Sperr- und Auslösevorrichtung 11 wird direkt von dem Bediengerät 3 betätigt.

Die Pufferschächte 10 sind nebeneinander derart angeordnet, daß die Unterkanten 13 der oberen Enden der Pufferschächte 10 an eine Übergabeebene 14 angrenzen, wobei die Übergabeebene 14 bei dem bevorzugten Ausführungsbeispiel von der Oberseite eines Auflagetischs 15 gebildet wird. Dies bedeutet, daß die Unterkanten 13 der oberen Enden der Pufferschächte 10 in Höhe der Oberfläche des Auflagetischs 15 oder - technologische Toleranzen berücksichtigend - kurz darunter angeordnet sind. Dadurch können auf dem Auflagetisch 15 aufliegende Stückgüter 22 in die Pufferschächte 10 hineingeschoben werden. Die Pufferschächte grenzen an einer Längskante des Auflagetischs 15 an. An der Querseite des Auflagetischs 15 grenzt eine Fördereinrichtung, insbesondere ein Förderband 16, an, auf welchem Stückgüter 17 herantransportiert werden. Das Förderband wird derart von der Steuereinrichtung gesteuert, daß der jeweilige Aufenthaltsort der herantransportierten Stückgüter 17 bekannt ist. Die Oberseite des Förderbands 16 liegt in einer Ebene mit der Oberseite des Auflagetischs 15 oder ist - wiederum technologische Toleranzen berücksichtigend - kurz darüber angeordnet.

Über dem Auflagetisch 15 und einen Teil des Förderbands 16 bewegt sich eine Greifvorrichtung 18 in der Längsrichtung des Auflagetischs 15. Die Greifvorrichtung 18 wird bei den in den Figuren 1 und 2 dargestellten Ausführungsbeispiel an zwei Führungsschienen 19 geführt. Die Greifvorrichtung 18 weist zwei Greifbacken 20 auf, mit denen ein Stückgut 22 ergriffen und auf dem Auflagetisch 15 in Längsrichtung verschoben werden kann. Zur Einlagerung des Stückguts 22 in einen ausgewählten Pufferschacht 10 fährt die Greifvorrichtung 18 zu einem vorgegebenen Ort auf dem Förderband 16. Dort erfassen die Greifbacken 20 das Stückgut. Dann fährt die Greifvorrichtung 18 in Längsrichtung bis zu einer Übergabeposition vor dem ausgewählten Pufferschacht 10. Dann wird das Stückgut quer zur Längsrichtung in den Pufferschacht hineingeschoben. Für diesen Quertransport ist an einer der Greifbacken 20 eine Querschiebevorrichtung 21 vorgesehen, die an dem Stückgut 22 angreift und dieses quer in den Pufferschacht 10 hineinschiebt. Die Querschiebevorrichtung 21 ist beispielsweise als ein um die Greifbacke 20 herum umlaufendes Gummiband ausgeführt.

Für die Greifvorrichtung 18 sind eine Vielzahl unterschiedlichster Ausführungsformen denkbar. Beispielsweise kann die Greifvorrichtung 18 einen eigenen Antriebsmotor aufweisen. Alternativ kann die Greifvorrichtung 18 mit einem Antriebsband gekoppelt sein, wobei das Antriebsband von einem an dem Lagergestell montierten Antriebsmotor bewegt wird. Die Greifbacken 20 der Greifvorrichtung 18 können senkrecht anheb- und absenkbar oder auch seitlich verschiebbar sein. Bei einer alternativen Ausführungsform kann auch ein Teil der Greifvorrichtung 18 zusammen mit den Greifbacken 20 anhebbar und absenkbar sein. Es können auch vier Greifbacken vorgesehen sein, die alternativ in Längs- oder in Querrichtung angreifen. Anstelle der Greifbacken können auch absenkbare Schiebefinger in Form von Platten oder Stiften vorgesehen sein.

Bei Ausführungsformen ohne Auflagetisch 15 ist die Greifvorrichtung 18 so ausgebildet, daß sie die ergriffenen Stückgüter 22 derart festhalten kann, daß diese nicht nach unten herausfallen. In diesem Fall wird die Querbewegung zum Einschieben der Packungen in die Pufferschächte 10 beispielsweise durch eine Bewegung der beiden Greifbacken 20 bewirkt.

Die Greifvorrichtung 18 kann auch so ausgebildet sein, daß ein Drehen eines erfaßten Stückguts auf dessen Auflagefläche möglich ist. Damit kann die Lage geändert werden, in der das Stückgut in dem Pufferschacht 10 geschoben werden soll.

Bei der Einlagerung der Stückgüter, insbesondere der Arzneimittelpackungen, wird wie folgt vorgegangen. Die einzelnen Stückgüter (Packungen) werden von einer Bedienperson auf ein Förderband aufgelegt. Zuvor können sie vor einen Barcode-Scanner gehalten werden, so daß ein auf der Stückgutoberfläche aufgebrachter Barcode erfaßt werden kann. Es sind auch Vorgehensweisen denkbar, bei denen der Barcode automatisch beim Weitertransport auf dem Förderband erfaßt wird. Wenn Stückgüter (Arzneimittelpackungen) eingelagert werden, die einen ID-Tag enthalten, können entsprechende Transponder-Leseeinrichtungen an dem Förderband vorgesehen sein.

Das Förderband transportiert die aufgelegten Stückgüter (Arzneimittelpackungen) durch eine Vermessungseinrichtung (Meßstation) hindurch. Hier werden die Außenabmessungen erfaßt. Die erfaßten Außenabmessungen werden mit denjenigen Soll-Außenabmessungen verglichen, die in einer Datenbank den aus dem Barcode-Aufdruck (oder ID-Tag) abgeleiteten Identifizierungsinformationen zugeordnet sind. Bei Nicht-Übereinstimmung wird ein Fehler gemeldet.

Anhand der Außenabmessungen wird ein in seiner Breite angepaßter Pufferschacht 10, der in der Lage ist, die Packung aufzunehmen, ausgewählt. Das Stückgut kann beim Weitertransport auch gedreht und gekippt werden. Anschließend wird das Stückgut 17 auf dem Transportband 16 zu einem bekannten Ort transportiert, an dem die Greifvorrichtung 18 das Stückgut 17 ergreifen und über den Auflagetisch 15 zu der Übergabeposition am oberen Ende des ausgewählten Pufferschachts 10 verschieben kann. An der Übergabeposition angelangt, stoppt die Greifvorrichtung 18. Dann wird das Stückgut 22 quer in das obere Ende des Pufferschachts 10 hineingeschoben.

Während die Bedienperson fortlaufend (beispielsweise alle drei Sekunden) ein neues Stückgut an dem Barcode-Scanner vorbeiführt und auf das Förderband auflegt, entnimmt die Greifvorrichtung 18 fortlaufend die herantransportierten Stückgüter und übergibt diese an die ausgewählten Pufferschächte 10. Das Vorsehen von mehreren Pufferschächten gleicher Breite, die jeweils eine Gruppe von Pufferschächten bilden, sowie von mehreren Gruppen von Pufferschächten unterschiedlicher Breite gestattet eine schnelle Vorkommissionierung (d. h. Vor-Sortierung) der einzulagernden Stückgüter. Anschließend kann der gesamte vorkommissionierte Inhalt eines gefüllten Pufferschachts 10 in den Transportschacht des Bediengeräts 3 übernommen und anschließend in einen Lagerschacht 2 hineingeschoben oder auf mehrere Lagerschächte 2 verteilt werden.

Die Antriebe für das Förderband 16, die Greifvorrichtung 18 einschließlich des Antriebs für die Greifbacken 20 und die Querschiebevorrichtung 21 und die Antriebe für das Bediengerät 3 sind ebenso wie der Barcode-Scanner (oder eine andere Identifikationserfassungseinrichtung) und die Meß-Vorrichtungen mit einer zentralen computergestützten Steuereinrichtung gekoppelt. Die Steuereinrichtung erfaßt die von Barcode-Scanner und Meßeinrichtung übermittelten Daten und überwacht laufend die jeweiligen Positionen der einzulagernden und gelagerten Stückgüter.

Da das Bediengerät 3 zum Zwecke der Auslagerung eines Stückguts nicht nur auf die bereits vorhandenen Lagerschächte 2, sondern auch auf die Pufferschächte 10 direkt zugreifen kann, kann ein eingelagertes Stückgut bei Verwendung des erfindungsgemäßen Einlagerungspuffers 9 bereits dann wieder ausgegeben werden, wenn es sich in einem der Pufferschächte 10 befindet. Das eingelagerte Stückgut steht also unmittelbar nach dem Scannen des Barcodes, dem Vermessen und dem Einfüllen in den Pufferschacht 10 (was insgesamt nur wenige Sekunden beansprucht) für eine Auslagerung wieder zur Verfügung.

## Patentansprüche

1. Einlagerungspuffer (9) für ein automatisiertes Stückgutlager (1) mit mehreren parallel angeordneten langgestreckten, geneigten Pufferschächten (10), wobei an dem unteren Ende jedes Pufferschachts (10) eine freigebbare Sperre (11) angeordnet ist, die ein Herausrutschen von in dem Pufferschacht befindlichen Stückgütern (12) verhindert und nach Herabfahren eines einzulagernde Stückgüter aufnehmendes Bediengeräts (3) freigebbar ist,
wobei die oberen Enden (13) der Pufferschächte (10) an eine Übergabeebene (14) angrenzen, **dadurch gekennzeichnet,**
**daß** mit einer Meßeinrichtung zum Erfassen von Abmessungen einzulagernder Stückgüter angeordnet ist,
**daß** eine Fördereinrichtung (16) an die Übergabeebene (14) angrenzt, auf der einzulagernde Stückgüter von der Meßeinrichtung zu einem einer Steuereinrichtung bekannten Ort auf der Fördereinrichtung herantransportiert werden, und
**daß** über der Übergabeebene (14)und dem bekannten Ort der angrenzenden Fördereinrichtung (16) eine von der Steuereinrichtung gesteuerte Greifvorrichtung (18) zum Ergreifen einzelner Stückgüter angeordnet ist, die ein an dem bekannten Ort auf der Fördereinrichtung eintreffendes Stückgut ergreifen und auf der Übergabebene (14) zu einem oberen Ende eines ausgewählten Pufferschachts (10) derart bewegen und dort freigeben kann, daß es in den Pufferschacht in einer vorgegebenen Orientierung hineinrutscht.

2. Einlagerungspuffer nach Anspruch 1, **dadurch gekennzeichnet, daß** die Greifvorrichtung (18) so ausgebildet ist und von der Steuereinrichtung gesteuert wird, daß das ergriffene Stückgut auf der Übergabeebene zwischen dem bekannten Ort auf der Fördereinrichtung und einer Übergabeposition vor dem oberen Ende des ausgewählten Pufferschachts linear nur in einer Längsrichtung und nach Erreichen der Übergabeposition quer zu der Längsrichtung in den Pufferschacht bewegt wird.

3. Einlagerungspuffer (18) nach Anspruch 2, **dadurch gekennzeichnet, daß** Greifvorrichtung ein Backengreifer ist, dessen Backen (20) quer zur Längsrichtung angeordnet sind.

4. Einlagerungspuffer nach Anspruch 2, **dadurch gekennzeichnet, daß** die Greifvorrichtung (18) in der Längsrichtung bewegbar ist und an der Greifvorrichtung eine Querschiebevorrichtung (21) zum Verschieben des ergriffenen Stückguts (22) in der Querrichtung vorgesehen ist.

5. Einlagerungspuffer nach Anspruch 4, **dadurch gekennzeichnet, daß** Greifvorrichtung ein Backengreifer ist, dessen Backen quer zur Längsrichtung angeordnet sind und daß an wenigstens einer Backe die Querschiebevorrichtung zum Verschieben des ergriffenen Stückguts in der Querrichtung vorgesehen ist.

6. Einlagerungspuffer nach Anspruch 5, **dadurch gekennzeichnet, daß** die Querschiebevorrichtung (21) ein um wenigstens eine der beiden Backen (20) umlaufendes Reibband umfaßt.

7. Einlagerungspuffer nach einem der Ansprüche 1 bis 6, **dadurch gekennzeichnet, daß** die Übergabeebene (14) von der Oberfläche eines Auflagetischs (15) gebildet wird, wobei die von der Greifvorrichtung (18) auf der Übergabeebene bewegten Stückgüter auf dem Auflagetisch (15) aufliegen.

8. Einlagerungspuffer nach Anspruch 7, **dadurch gekennzeichnet, daß** der Auflagetisch (15) rechteckig ist und die oberen Enden der Pufferschächte (10) an einer Längskante des Auflagetischs und die Fördereinrichtung (16) an einer Querkante angrenzt.

9. Einlagerungspuffer nach Anspruch 7 oder 8, **dadurch gekennzeichnet, daß** die Oberfläche des Auflagetischs (15) waagerecht ist.

10. Einlagerungspuffer nach einem der Ansprüche 1 bis 9, **dadurch gekennzeichnet, daß** die Fördereinrichtung ein ebenes Förderband (16) aufweist.

11. Einlagerungspuffer nach einem der Ansprüche 1 bis 10, **dadurch gekennzeichnet, daß** mehrere Gruppen von Pufferschächten unterschiedlicher Breiten vorgesehen sind, wobei jede Gruppe eine vorgegebene Anzahl von Pufferschächten einer Breite aufweist.

12. Einlagerungspuffer nach Anspruch 11, **dadurch gekennzeichnet, daß** fünf bis acht Gruppen mit jeweils zwei bis fünf Pufferschächten vorgesehen sind.

## Claims

1. A storage buffer (9) for an automated article store (1) with a plurality of parallel, elongate and inclined buffer shafts (10), wherein arranged at the lower end of each buffer shaft (10) there is a releasable stop (11), which prevents articles situated in the buffer shaft from sliding out and is releasable after the approach of a handling device (3) holding an article to be stored, wherein the upper ends (13) of the buffer shafts (10) adjoin a transfer plane (14), **characterised in that** a measuring device for detecting dimensions of articles to be stored is provided, that a conveyor device (16) adjoins the transfer plane (14), onto which articles to be stored are transported from the measuring device to a location, known to a control device, on the conveyor device and that arranged above the transfer plane (14) and the known location of the adjoining conveyor device (16) there is a gripping device (18), which is controlled by the control device, for gripping individual articles, which can grip an article arriving at the known location on the conveyor device and can move it on the transfer plane (14) to an upper end of a selected buffer shaft and there release it such that it slides into the buffer shaft in a predetermined orientation.

2. A storage buffer (18) as claimed in Claim 1, **characterised in that** the gripping device (18) is so constructed and controlled by the control device that the gripped article is moved on the transfer plane between the known location on the conveyor device and a transfer position in front of the upper end of the selected buffer shaft linearly only in a longitudinal direction and, after reaching the transfer position, transversely to the longitudinal direction into the buffer shaft.

3. A storage buffer (18) as claimed in Claim 2, **characterised in that** the gripping device is a jaw gripper, the jaws (20) of which are arranged transversely to the longitudinal direction.

4. A storage buffer as claimed in Claim 2, **characterised in that** the gripping device (18) is movable in the longitudinal direction and provided on the gripping device there is a transverse sliding device (21) for moving the gripped article (22) in the transverse direction.

5. A storage buffer as claimed in Claim 4, **characterised in that** the gripper device is a jaw gripper, the jaws of which are arranged transversely to the longitudinal direction and that the transverse sliding device for moving the gripped article in the transverse direction is provided on at least one jaw.

6. A storage buffer as claimed in Claim 5, **characterised in that** the transverse sliding device (21) includes a friction band extending around at least one of the two jaws (20).

7. A storage buffer as claimed in one of Claims 1 to 6, **characterised in that** the transfer plane (14) is constituted by the surface of a support table (15), wherein the articles moved by the gripping device (18) on the transfer plane rest on the support table (15).

8. A storage buffer as claimed in Claim 7, **characterised in that** the support table (15) is rectangular and the upper ends of the buffer shafts (10) adjoin a longitudinal edge of the support table and the conveying device (16) at a transverse edge.

9. A storage buffer as claimed in Claim 7 or 8, **characterised in that** the surface of the support table (15) is horizontal.

10. A storage buffer as claimed in Claims 1 to 9, **characterised in that** the conveyor device has a flat conveyor belt (16).

11. A storage buffer as claimed in one of Claims 1 to 10, **characterised in that** a plurality of groups of buffer shafts of different widths are provided, wherein each group has a predetermined number of buffer shafts of one width.

12. A storage buffer as claimed in Claim 11, **characterised in that** five to eight groups are provided with two to five buffer shafts in each case.

## Revendications

1. Tampon de stockage (9) destiné à un magasin d'articles automatisé (1) comprenant plusieurs puits tampons (10) allongés, inclinés et disposés parallèlement l'un à l'autre, dans lequel, à l'extrémité inférieure de chaque puits tampon (10), on aménage un dispositif de blocage déblocable (11), qui empêche un glissement vers l'extérieur des articles (12) se trouvant dans le puits tampon et peut être débloqué a l'approche d'un appareil de commande (3) recevant des articles à stocker, les extrémités supérieures (13) des puits tampons (10) étant limitrophes d'un plan de transfert (14),
**caractérisé en ce que**
l'on prévoit un dispositif de mesure pour enregistrer les dimensions d'articles à stocker,
un dispositif de transport (16) est limitrophe du plan de transfert (14), sur lequel des articles à stocker sont transportés du dispositif de mesure à un emplacement connu d'un dispositif de commande sur le dispositif de transport, et
l'on aménage sur le plan de transfert (14) et l'emplacement connu du dispositif de transport limitrophe (16) un dispositif de préhension (18) commandé par le dispositif de commande pour saisir des articles individuels, lequel dispositif de préhension peut saisir un article arrivant à l'emplacement connu sur le dispositif de transport et peut le déplacer sur le plan de transfert (14) à une extrémité supérieure d'un puits tampon choisi (10) et l'y libérer de sorte qu'il glisse dans le puits tampon selon une orientation prédéfinie.

2. Tampon de stockage selon la revendication 1, **caractérisé en ce que** le dispositif de préhension (18) est conçu et commandé par le dispositif de commande de sorte que l'article saisi soit déplacé de manière linéaire, uniquement en direction longitudinale, sur le plan de transfert entre l'emplacement connu sur le dispositif de transport et une position de transfert avant l'extrémité supérieure du puits tampon choisi et, après avoir atteint la position de transfert, transversalement à la direction longitudinale dans le puits tampon.

3. Tampon de stockage (18) selon la revendication 2, **caractérisé en ce que** le dispositif de préhension est une pince de robot, dont les mâchoires (20) sont disposées transversalement à la direction longitudinale.

4. Tampon de stockage selon la revendication 2, **caractérisé en ce que** le dispositif de préhension (18) est déplaçable dans la direction longitudinale et il est prévu, sur le dispositif de préhension, un dispositif de déplacement transversal (21) pour déplacer l'article saisi (22) dans la direction transversale.

5. Tampon de stockage selon la revendication 4, **caractérisé en ce que** le dispositif de préhension est une pince de robot, dont les mâchoires sont disposées transversalement à la direction longitudinale et, sur au moins une mâchoire, il est prévu le dispositif de déplacement transversal pour déplacer l'article saisi dans la direction transversale.

6. Tampon de stockage selon la revendication 5, **caractérisé en ce que** le dispositif de déplacement transversal (21) comprend une bande de friction entourant au moins l'une des deux mâchoires (20).

7. Tampon de stockage selon l'une quelconque des revendications 1 à 6, **caractérisé en ce que** le plan de transfert (14) est formé par la surface d'une table d'appui (15), dans lequel les articles déplacés par le dispositif de préhension sur le plan de transfert reposent sur la table d'appui (15).

8. Tampon de stockage selon la revendication 7, **caractérisé en ce que** la table d'appui (15) est rectangulaire et les extrémités supérieures des puits tampons (10) sont limitrophes d'une arête longitudinale de la table d'appui et le dispositif de transport (16) d'une arête transversale.

9. Tampon de stockage selon la revendication 7 ou 8, **caractérisé en ce que** la surface de la table d'appui (15) est horizontale.

10. Tampon de stockage selon l'une quelconque des revendications 1 à 9, **caractérisé en ce que** le dispositif de transport présente une bande de transport plane (16).

11. Tampon de stockage selon l'une quelconque des revendications 1 à 10, **caractérisé en ce que** l'on prévoit plusieurs groupes de puits tampons de largeurs différentes, chaque groupe présentant un nombre prédéfini de puits tampons d'une certaine largeur.

12. Tampon de stockage selon la revendication 11, **caractérisé en ce que** l'on prévoit cinq à huit groupes comprenant respectivement deux à cinq puits tampons.
